# EUROPEAN PATENT APPLICATION

(11) **EP 4 550 780 A1**
(43) Date of publication of application: **07.05.2025**
(21) Application number: 24205918.6
(22) Date of filing: 10.10.2024
(51) Int. Cl.: H04N 19/115, H04N 19/176, H04N 19/184, H04N 19/186, H04N 19/85, H04N 19/90

(54) **METHODS AND DEVICES FOR TEXTURE CODING**

(30) Priority: 03.11.2023 GB 202316893
(71) Applicant: Sony Interactive Entertainment Inc., Tokyo 108-0075 (JP)
(72) Inventor: CERRATO, Maurizio, London, W1F 7LP (GB); LEUNG, Jun Yen, London, W1F 7LP (GB); GREEN, Lawrence Martin, London, W1F 7LP (GB)
(74) Representative: D Young & Co LLP

(57) **Abstract**

A method for texture encoding, the method comprising the steps of: compressing a first colour channel of a given texture to obtain a plurality of fixed-sized data chunks representative of the first colour channel of a corresponding plurality of fixed-sized blocks of pixels of the given texture; for the given texture, training, using the plurality of fixed-sized data chunks, a neural network to output an inferred pixel colour block representative of at least a second colour channel of a respective fixed-sized block of pixels of the given texture based on an input representative of a respective fixed-sized data chunk representative of the first colour channel of the respective fixed-sized block of pixels of the given texture; and outputting at least one of the fixed-sized data chunks and the weights of the trained neural network as an encoded representation of at least a portion of the given texture.

## Description

### Field of Invention

The present invention relates to methods and devices for texture coding.

### Background

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior art against the present invention.

As processing speeds and display technologies have improved, users expectations of rendering capabilities have likewise increased. Meanwhile, as rendering capabilities increase, some hardware requirements may not be able to keep up with the increased capabilities, which may result in a bottleneck in rendering capabilities.

One such bottleneck is a memory footprint of textures that get transformed and filtered by the GPU in the GPU's rendering pipeline. For example, increasing a texture's resolution from 1920x1080 (1080p) to 3840x2160 (4K) requires a fourfold increase in the number of pixels required for that texture. As another example, an increasing a texture's colour bit depth from 8-bit RGB to 10-bit RGB requires a 25% increase in memory requirements for that texture.

Therefore, in order for GPUs to keep up with memory requirements for increased rendering capabilities, texture coding techniques are employed to compress textures that are to be stored in a memory accessible by a GPU.

Conventional video encoders and decoders use one or more for a variety of methods for removing redundant image elements from the source image, for example by quantisation (to intelligently reduce the number of values to transmit), by the removal of high frequency components (which may have limited visual impact), and by the removal of spatially and/or temporary redundant components (for example repeating blocks of values within an image, or corresponding values between successive images, optionally after taking account of inter-image movement). These approaches can be seen in various well-known encoding techniques such as gif, JPEG, and MPEG images and videos.

However, many of these coding formats are not suitable for coding textures for rendering by a GPU because a GPU needs to be able to access any portion of a texture when needed. Therefore, image coding formats that feature dependencies between different coded image regions are generally unsuitable, because it may increase the latency for the GPU to decode a particular image region if it is dependent on decoding another image region first.

Therefore, it is advantageous for texture coding techniques to be optimised for random access (i.e. any region of a coded texture should be as accessible as any other region of the coded texture by the GPU). Notably, encoding speed is not considered to be particularly important in the field of texture coding for GPU rendering because it is usually only necessary to encode any given texture a single time.

However, there is an ongoing desire to provide more efficient texture coding techniques, and the present application seeks to address or alleviate this desire.

### Summary of the Invention

In a first aspect, a method for texture encoding is provided in claim 1.

In another aspect, a method for texture decoding is provided in claim 4.

In another aspect, a neural network for texture coding is provided in claim 9.

In another aspect, a texture encoder is provided in claim 13.

In another aspect, a texture decoder is provided in claim 14

Further respective aspects and features of the invention are defined in the appended claims.

### Brief Description of the Drawings

Embodiments of the present invention will now be described by way of example with reference to the accompanying drawings, in which:
- Figure 1 schematically illustrates an example entertainment system;
- Figure 2 schematically illustrates an example texture encoding method;
- Figure 3 schematically illustrates an example neural network;
- Figure 4 schematically illustrates an example texture decoding method;
- Figure 5 schematically illustrates an example texture encoder; and
- Figure 6 schematically illustrates an example texture decoder.

### Description of the Embodiments

In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

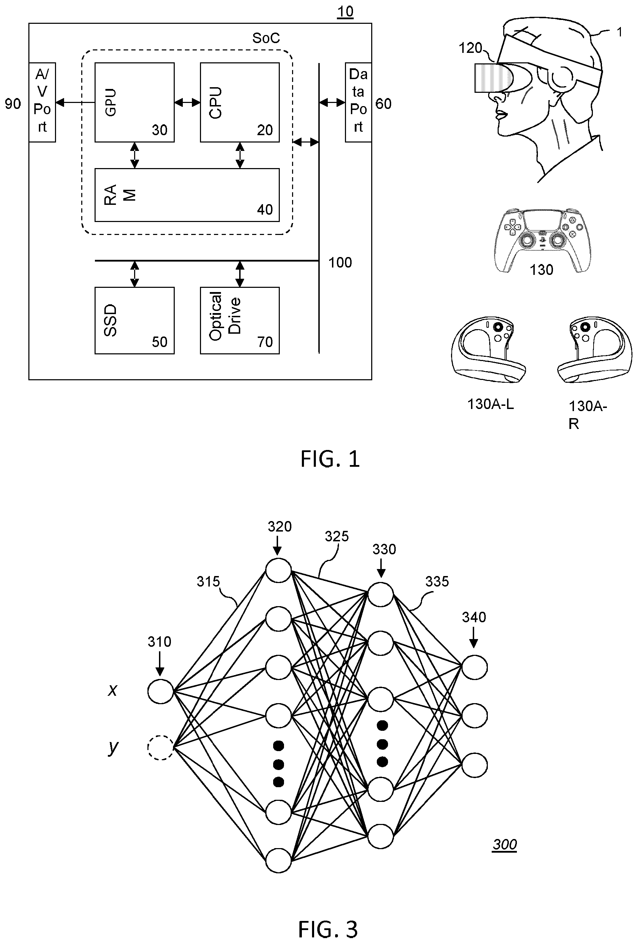

Referring to Figure 1, an example of an entertainment system 10 is a computer or console.

The entertainment system 10 comprises a central processor or CPU 20. The entertainment system also comprises a graphical processing unit or GPU 30, and RAM 40. Two or more of the CPU, GPU, and RAM may be integrated as a system on a chip (SoC). Further storage may be provided by a disk 50, either as an external or internal hard drive, or as an external solid state drive, or an internal solid state drive.

The entertainment device may transmit or receive data via one or more data ports 60, such as a USB port, Ethernet^{®} port, Wi-Fi^{®} port, Bluetooth^{®} port or similar, as appropriate. It may also optionally receive data via an optical drive 70. Audio/visual outputs from the entertainment device are typically provided through one or more A/V ports 90 or one or more of the data ports 60.

Where components are not integrated, they may be connected as appropriate either by a dedicated data link or via a bus 100.

An example of a device for displaying images output by the entertainment system is a head mounted display 'HMD' 120, worn by a user 1. Interaction with the system is typically provided using one or more handheld controllers 130, and/or one or more VR controllers (130A-L,R) in the case of the HMD.

A graphics processing unit (GPU), such as the GPU 30, may comprise RAM, such as RAM 40. In the case of a GPU, the RAM is sometimes referred to as video RAM or VRAM. VRAM is used by the GPU for storing data including image data and texture data to be used in rendering and displaying images.

As processing speeds and display technologies have improved, users expectations of rendering capabilities have likewise increased. Meanwhile, as rendering capabilities increase, some hardware requirements may not be able to keep up with the increased capabilities, which may result in a bottleneck in rendering capabilities.

One such bottleneck is a memory footprint of textures that get transformed and filtered by the GPU in the GPU's rendering pipeline. For example, increasing a texture's resolution from 1920x1080 (1080p) to 3840x2160 (4K) requires a fourfold increase in the number of pixels required for that texture. As another example, an increasing a texture's colour bit depth from 8-bit RGB to 10-bit RGB requires a 25% increase in memory requirements for that texture.

Moreover, modern rendering techniques frequently use a plurality of textures (such as a light map, a specular texture, a gloss texture, a diffuse texture, etc.) when rendering a single surface to better render higher frequency components and provide higher quality rendered images.

Whilst it is possible to physically add more memory modules to a GPU to increase the overall memory capacity of the GPU, this requires placing memory modules further away from the GPU die, which results in an increased latency when the GPU accesses the memory. This is undesirable because GPU memory has high bandwidth and low latency requirements.

Therefore, in order for GPUs to keep up with memory requirements for increased rendering capabilities, texture coding techniques are employed to compress textures that are to be stored in a memory accessible by a GPU.

There are many techniques for coding images and videos that have been developed that may reduce an images size with a minimal loss in quality. Examples include high-efficiency video coding (HEVC), JPEG, high-efficiency image file format (HEIF), etc. However, many of these coding formats are not suitable for coding textures for rendering by a GPU, because a GPU needs to be able to access any portion of a texture when needed. Therefore, image coding formats that feature dependencies between different coded image regions are generally unsuitable, because it may increase the latency for the GPU to decode a particular image region if it is dependent on decoding another image region first.

Therefore, it is advantageous for texture coding techniques to be optimised for random access (i.e. any region of a coded texture should be as accessible as any other region of the coded texture by the GPU). Notably, encoding speed is not considered to be particularly important in the field of texture coding for GPU rendering because it is usually only necessary to encode any given texture a single time.

Texture compression techniques typically perform lossy compression on a plurality of fixed-sized blocks of pixels of a texture to generate a corresponding plurality of fixed-sized data chunks. Example techniques include the block compression algorithms (e.g. BCn), block truncation coding, etc.

One block compression algorithm, known as BC1, may compress a 4x4 block of RGB pixels of a texture into an 8-byte data chunk storing an RGB representation of the 4x4 block of RGB pixels. The BC1 algorithm stores two reference colours in an RGB format using 5 red bits, 6 green bits and 5 blue bits for each reference colour. The two reference colours therefore make up 4 bytes of the 8-byte data chunk. The remaining 4 bytes are used to assign a 2-bit colour index to each of the 16 pixels in the 4x4 block of RGB pixels, where a respective one of the 2-bit colour indices specifies either one of the two reference colours or one of two colours interpolated between the two reference colours (i.e. 4 possible colours).

Another block compression algorithm, known as BC4, may compress a 4x4 block of pixels into an 8-byte data chunk storing a greyscale representation of the 4x4 block of pixels. Similar to the BC1 algorithm, the BC4 algorithm stores two reference colours. However, in the case of BC4, each of the reference colours is stored in an 8-bit greyscale format. The two reference colours therefore make up 2 bytes of the 8-bytes data chunk. The remaining 4 bytes are used to assign a 3-bit colour index to each of the 16 pixels in the 4x4 block of pixels, where a respective one of the 3-bit colour indices specifies either one of the two reference colours or one of six colours interpolated between the two reference colours (i.e. 8 possible colours).

Therefore, in comparison to BC1, using BC4 may provide a more accurate representation of a block of pixels for the same memory footprint, but the representation is limited to greyscale.

Other block compression algorithms (such as BC2, BC3, BC5, etc.) may use variations on the above techniques to provide an increased quality over BC1 or BC4 but at a cost of an increased memory footprint per compressed pixel.

It is desirable to provide a texture coding technique that may provide an increased quality without increasing a memory footprint per encoded pixel in comparison to the above described block compression techniques. Alternatively, or in addition, it is desirable to provide a texture coding technique that may encode a block of pixels at a reduced a memory footprint per encoded pixel at an equivalent quality in comparison to the above described block compression techniques.

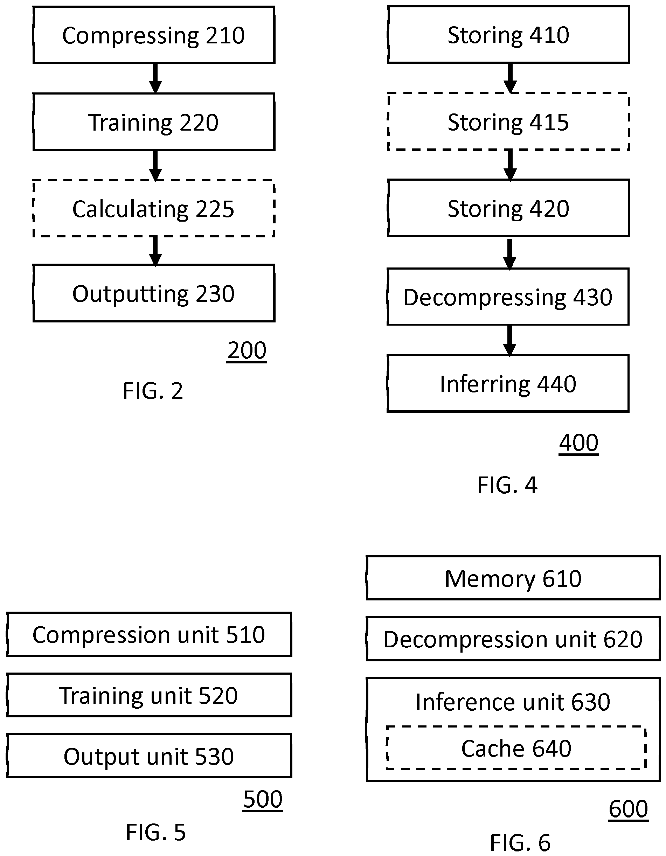

Accordingly, turning now to figure 2, a method 200 for texture encoding is provided in accordance with embodiments of the present disclosure.

The method 200 comprises a step of compressing 210 a first colour channel of a given texture to obtain a plurality of fixed-sized data chunks representative of the first colour channel of a corresponding plurality of fixed-sized blocks of pixels of the given texture.

The given texture is the texture to be encoded. For example, the given texture may be any one of a diffuse texture map, a gloss texture map, a height texture map, a roughness texture map, a specular texture map, etc.

The first colour channel may be one of a red colour channel; a green colour channel; or a blue colour channel. However, it should be noted that the present techniques are not limited to the first colour channel being one of red, green or blue colour channel, and the first colour channel may alternatively be of any other colour channel such as a greyscale colour channel, or even any one-dimensional data type that may be represented by a texture map (e.g. height data for a height map).

In some cases, it may be particularly advantageous to use a green colour as the first colour channel, because the inferred colour channels may, in some cases, be slightly less accurate than the coded colour channel. In these cases, it may be advantageous for the first colour channel to be a green colour channel because the human visual system is more sensitive to differences in green light in comparison to red or blue light. Therefore, the slight decrease in accuracy due to the inference may be less noticeable or imperceptible for red and blue colour channels even if equivalent decreases in accuracy could be noticeable or perceptible for a green colour channel.

The step of compressing 210 may be performed in accordance with the above described BC4 algorithm for example. However, it should be noted that the presently disclosed techniques are not limited to using the BC4 algorithm, or even limited to using the BCn algorithms. For example, the BCn algorithms are all applied to a respective 4x4 blocks of pixels. The presently claimed techniques is not limited to such an implementation and may instead may compress a 5x5 block of pixels, a 6x6 block of pixels, a 3x3 block of pixels, a 10x10 block of pixels, or any other sized block of pixels as the size of the fixed-sized block of pixels. However, it should be noted that the present techniques still require that a fixed-sized block of pixels is used, but any particular size may be selected as the fixed-size for a given implementation.

Additionally, the present techniques are not limited to square block sizes and may, for example, use a 4x8 block of pixels, an 8x4 block of pixels, a 3x5 block of pixels, a 4x3 block of pixels or, any other sized block of pixels as the size of the fixed-sized blocks of pixels.

The method 200 further comprises a step of training 220 a neural network for the given texture. The neural network is trained using the plurality of fixed-sized data chunks (from the step of compressing 210). The neural network is trained to output an inferred pixel colour block representative of at least a second colour channel of a respective fixed-sized block of pixels of the given texture based on an input representative of a respective fixed-sized data chunk representative of the first colour channel of the respective fixed-sized block of pixels of the given texture.

The second colour channel may be a colour channel of a respective fixed-sized block of pixels of the given texture. For example, the first colour channel may be a green colour channel and the second colour channel may be a blue colour channel or a red colour channel. Of course, it will be appreciated that the neural network may be trained to, and used to, infer one or more additional pixel colour blocks representative of one or more other colour channels of the fixed-sized block of pixels of the given texture in addition to inferring the pixel colour block for the second colour channel based on an input representative of the fixed-sized data chunk.

As an example, the first colour channel may be a green colour channel, and the neural network may be trained to, and used to, infer a blue pixel colour block representative of a blue colour channel of a fixed-sized block of pixels of the given texture and infer a red pixel colour block representative of a red colour channel of a fixed-sized block of pixels of the given texture. Additionally, the neural network may be trained to, and used to, infer additional pixel colour blocks for other colour channels (which may, for example, include a height pixel colour block of a height data channel for a height map of the given texture).

An example neural network would be a fully connected multi-layer perceptron, i.e. a fully connected multi-layer network having one or more hidden layers. Typically such a neural network operates as a feedforward neural network, trained using a backpropagation algorithm to approximate target outputs in response to corresponding inputs. More generally the neural network can be implemented as a fully connected neural network, a deep neural network (DNN), multilayer perceptron (MLP), feedforward artificial neural network (ANN), or a convolutional neural network (CNN, or ConvNet).

The method 200 further comprises a step of outputting 230 at least one of the fixed-sized data chunks and the weights of the trained neural network as an encoded representation of at least a portion of the given texture.

For example, the encoded representation may be output to a storage device for access by a GPU. Alternatively, or in addition, the encoded representation may be output by streaming or transmitting the encoded representation over a network. Additionally, the encoded representation may stored as a part of a video game to be provided to user (e.g. by downloading, streaming or acquiring a physical copy of the video game such as by acquiring a disc or memory card storing the video game).

Optionally, the encoded representation may output in the outputting 230 step may include outputting the weights of the trained neural network and the plurality of fixed-sized data chunks as an encoded representation of the entire texture.

This approach has the scope to be highly efficient as the neural network can learn how best to represent at least the second colour channel of the given texture based on the above described input within the weights that comprise the neural network, the weights effectively then being the coded representation of at least the second colour channel. The memory footprint for encoding at least the second colour channel can then be controlled by controlling the number of nodes within the neural network when training the neural network for a given texture, which in turn determines the number of weights available to the neural network.

Hence, a degree of compression of at least the second colour channel may be controlled by the number of nodes (typically hidden nodes) within the neural networks trained for respective textures, and each neural network may learn the best representation of at least the second colour channel of the given texture for the memory footprint used by the weights of the network.

Accordingly, in embodiments of the present disclosure, a neural network for texture coding trained for a given texture is provided. The neural network is trained to receive an input representative of a respective fixed-size data chunk representative of a first colour channel of a respective fixed-sized block of pixels of the given texture; and output an inferred pixel colour block representative of at least a second colour channel of the respective fixed-sized block of pixels of the given texture.

Turning now to figure 3, an example neural network 300 comprises an input node layer 310, an output node layer 340 and one or more hidden layers 320, 330. The hidden layers may comprise any suitable number of nodes. Between each layer are typically a fully connected set of weights 315, 325, 335; that is to say there is a weight between each node in adjoining layers. However, optionally the network does not need to be fully connected in this manner, and so some weights may not be included.

In embodiments of the present description, a first input node (x) may be representative of a colour value in the first colour channel of a pixel of a first pixel colour block representative of the first colour channel of a fixed-sized block of pixels of the given texture. The first pixel colour block may be obtained by decompressing the fixed-sized data chunk representative of the fixed-sized block of pixels of the given texture for example. The neural network may have one or more output nodes, which may each indicate the colour values for the pixel in another colour channel.

Optionally, as indicated by the dashed outline, a second input node (y) may be representative of a position of the fixed-sized block of pixes (or a position of the pixel within that block) within the given texture (which may, for example, be represented by a position in memory of the fixed-sized data chunk relative to the other fixed sized data chunks for the given texture, or an index value indicative of the same).

Alternatively, in other embodiments of the present disclosure, the neural network may not need to use a colour value of a pixel of the first pixel colour block that may be obtained by decompressing the fixed-sized data chunk. In these embodiments, the input nodes of the neural network may indicate parameters represented by the fixed sixed data chunk.

For example, a first input node may indicate a first reference colour value of the first colour channel, a second input node may indicate second reference colour value of the first colour channel, and a third input node may indicate a colour index, all of which may be represented by values within the fixed-sized data chunk as described elsewhere herein.

The neural network may optionally comprise one or more other input nodes that may, for example, indicate: a position in memory of the fixed-sized data chunk relative to the other fixed sized data chunks for the given texture; a position of the colour index relative to the other colour indices in the fixed-sized data chunk; one or more of the other colour indices within the fixed-sized data chunk; and any other suitable parameter that may be indicated by one of the input nodes.

In some embodiments of the present disclosure, the neural network may be used to generate an output for each pixel of an inferred pixel colour block individually. Alternatively, the neural network may be used to generate an output for all of the pixels of an inferred pixel colour block collectively. In other words, the neural network may comprise at least one output node for each of the pixels of the inferred pixel colour block. In other words, the neural network may be used to output the entire inferred pixel colour block.

The neural network is trained for a given texture using the plurality of fixed-sized data chunks obtained in the compressing 210 step.

In some embodiments of the present disclosure, a loss function for the neural network may be calculated by using at least the second colour channel of a respective fixed-sized block of pixels of the given texture as a ground truth. For example, an inferred pixel colour block representative of at least a second colour channel of a respective fixed-sized block of pixels of the given texture may be compared to the second colour channel of the respective fixed-sized block of pixels of the given texture to calculate a loss function.

Therefore, in some embodiments of the present disclosure, the step of training 220 the neural network may optionally (as indicated by the dashed outline in figure 2) comprise a step of calculating 225 a loss function for the neural network by using at least the second colour channel of the respective fixed-sized block of pixels of the given texture as a ground truth.

Alternatively, or in addition, a different type of fixed-size data chunk representative of at least the second colour channel of a respective fixed-sized block of pixels may be obtained (for example, by performing the same compression used to obtain the fixed-size data chunk representative of the first colour channel of the respective fixed-sized block of pixels but for at least the second colour channel instead of the first). A respective training pixel colour block representative of at least the second colour channel of the fixed-sized block of pixels of the given texture may be obtained by decompressing the different type of fixed-sized training block.

In these embodiments of the present disclosure, a loss function for the neural network may be calculated by using the respective training pixel colour block as a ground truth. For example, an inferred pixel colour block representative of at least a second colour channel of a respective fixed-sized block of pixels of the given texture may be compared to the respective training pixel colour block representative of the second colour channel of the respective fixed-sized block of pixels of the given texture to calculate a loss. In other words, the ground truth may be defined as the result of performing a texture compression/decompression on for at least the second colour channel of the given texture. Whilst the compression may be lossy (meaning the ground truth used will not be identical to the second colour channel of the given texture), overfitting may be prevented because the ground truth would be a closer resemblance to an expected texture compression result.

The training may continue until an error criterion is met.

The error criterion may comprise some or all of the following:
i. The total error for all the inferred colour pixel blocks is below a threshold amount (indicating that a predefined quality/accuracy level has been met).
   - alternatively the total error for a subset of the inferred colour pixel blocks is below a separate threshold amount (simply indicating that a representative sample of the inferred colour pixel blocks meet a predefined quality/accuracy level).
ii. The average error for all or a subset of the inferred colour pixel blocks is below a threshold amount (there will be appreciated that the average is a similar measure to the total for the purposes of meeting a predefined quality/accuracy level).
iii. The error for no more than N inferred colour pixel blocks (or N pixels within a respective inferred colour pixel block) is above a threshold amount (where N indicates a maximum for an acceptable number of the inferred colour pixel blocks (or number of pixels within a respective inferred colour pixel block) that have a significant error - optionally such errors could be subsequently corrected at the decoder using error masking techniques).
iv. The total or average error has not changed by a threshold amount after M training iterations (i.e. the neural network has likely achieved its best available outcome for the current training process, or that subsequent training iterations will represent a sufficiently small return on computational investment that they should not be continued).

Once trained, the neural network comprises an internal representation within its weights of how to translate an input representative of a respective fixed-sized data chunk representative of the first colour channel of the respective fixed-sized block of pixels of the given texture into an inferred pixel colour block representative of at least a second colour channel of a respective fixed-sized block of pixels of the given texture.

Assuming that the architecture/layout of the neural network is known by a decoder, then only the weight values for the neural network need to be provided to the decoder in order for the decoder to be able to infer a pixel colour block representative of at least the second colour channel of a fixed-sized block of pixels of the given texture from an input representative of a fixed-sized data chunk representative of the first colour channel of the fixed-sized block of pixels of the given texture.

Optionally during training, the weight values can be constrained to values that are optimised for storage in memory. For example typically weights lie within the range 0 to 1; however, the system may be forced during training to use weight values being fractions of 256 or 65536 (e.g. by selecting the fraction closest to the calculated change of weight); the weights could then be represented exactly using one or two bytes each. Other bitwise plantations of values may be considered, or the P most common values within the network (or between respective layers) could be chosen using one or more quantisation schemes.

With such an approach, modifications to the training scheme can also be considered; for example the network could first be trained conventionally, and then the weight values could be constrained to fractions such as those above or to values corresponding to a quantisation scheme, and then only a subset of the network (for example within one layer) may be given top-up training to compensate for the small changes in weight values imposed throughout the network by this approach; optionally this layer may be output with a different fidelity of values. Or for example most of the layers may be trained using fractions of 256, with one layer (for example the final set of weights leading to the output nodes) being trained using fractions of 65535.

In any event, the weights of the neural network may then be output with at least one of the fixed-sized data chunks as an encoded representation of at least a portion of the given texture. The weights may be output as, for example, a stream of data or as a file, or exported as part of a software product such as an optical disc.

As an illustrative example, consider an 8-bit RGB texture having a resolution of 1920x1080. Uncompressed, this texture will require ~6.2MB of memory (1 byte per colour per pixel). The BC1 algorithm described above may compress a texture so that each fixed-sized data chunk (obtained by compressing a block of 16 pixels in the texture) has a fixed size of 8 bytes (or 4 bits/0.5 bytes per pixel). Therefore, if this texture is encoded using the BC1 algorithm described above, the BC1 compressed texture will require ~1MB of memory (4 bits/0.5 bytes per pixel).

Meanwhile, the presently described techniques may provide an encoded representation of the texture at a quality level equivalent to that of the BC1 compressed texture but with a reduced memory footprint. For example, a texture may be encoded in a similar manner to the above described BC4 technique (i.e. using two 1-byte reference colours for the first colour channel) except that each colour index may be a 2-bit colour index (like the BC1 algorithm) instead of a 3-bit colour index. Therefore, the size of each fixed-sized data chunk (by compressing a block of 16 pixels in the texture) has a fixed size of 6 bytes (or 3 bits per pixel). Therefore, each fixed-sized data chunk has a memory footprint 25% less than the memory footprint of a BC1 fixed-sized data chunk.

Therefore, all of the fixed-sized data chunks of the texture will require ~0.75MB of memory. Of course, all of the fixed-sized data chunks for the texture are only for the first colour channel (e.g. green). Therefore, the encoded representation output by the currently disclosed techniques also comprises a set of weights for a neural network trained for the texture to obtain at least the second colour channel (in this case the neural network is trained to obtain the two remaining colour channels, e.g., red and blue). The weights will also have their own memory footprint. However, as noted above, each weight for the neural network trained for the texture may only have a memory footprint of 1 or 2 bytes.

Therefore, in a case where each weight has a memory footprint of 1 bytes, even if the neural network comprises 200,000 weights, the encoded representation would have a memory footprint of ~0.95MB (0.75MB for all of the fixed-sized data chunks for the texture and 0.2MB for the neural network weights), which is 5% less than the BC1 compressed texture for an equivalent quality.

Of course, it will be appreciated that the neural network may comprise less (or more) weights. For example, in a case where the neural network comprises 10,000 weights, the encoded representation would have a memory footprint of ~0.76MB (0.75MB for all of the fixed-sized data chunks for the texture and 0.01MB for the neural network weights), which is "24% less than the BC1 compressed texture for an equivalent quality.

Additionally, consider another example similar to the above example except that the texture is an 8-bit RGB texture having a resolution of 3840x2160 (i.e. 4 times the size of the texture in the previous example). Uncompressed, this texture will require ~25MB of memory (1 byte per colour per pixel). In this example, the BC1 compressed texture will require ~4MB of memory. Meanwhile, the memory footprint of all of the fixed-sized data chunks of the texture encoded in accordance with the embodiments of the present disclosure will require ~3MB of memory.

Therefore, in a case where the neural network comprises 200,000 weights, the encoded representation would have a memory footprint of ~3.2MB, which is "20% less than the BC1 texture compression. From this example, it can be seen that the greater the memory footprint of an uncompressed texture, the proportion of the memory footprint of the encoded representation used by the weights will be decreased.

Of course, it will be appreciated that, in the above examples, 3-bit colour indices may be used instead of 2-bit colour indices. In this case, the memory footprint of all of the fixed-sized data chunks of the texture encoded in accordance with the embodiments of the present disclosure would be the same as the memory footprint of the BC1 compressed texture (i.e. 8 bytes). Therefore, in this case, the memory footprint of an encoded representation provided in accordance with techniques of the present disclosure will be slightly larger than the memory footprint of the BC1 compressed texture due to the output weights. However, the quality of the compressed texture will be higher in comparison to the BC1 compressed texture due to using a 3-bit colour index instead of a 2-bit colour index (which is used for BC1).

Because a neural network is trained for a given texture, a respective neural network may be trained for a respective texture.

However, in some cases, a neural network may be trained for a group of similar textures. In these cases, the trained neural network may not be as accurate for any individual texture from the group of textures in comparison to a neural network trained specifically for an individual texture, but the trained neural network may still provide sufficient quality and/or efficiency improvements in comparison to a case where no neural network is used.

Additionally, training a neural network for a group of similar textures may advantageously reduce a total amount of training time required for the group of similar textures in comparison to a case where a respective neural network is trained for each of the textures in the group (although the amount of time required for training a neural network for a group of similar textures may be higher than the amount of time that would be required for training an individual neural network for any one of the textures in the group).

In some cases, a bespoke neural network may be trained for more important textures (e.g. textures that are used more often or are more prominent such as object textures), whilst a neural network may be trained for a group of similar textures if the similar textures are less important/background textures (e.g. textures that are used less often or are less prominent such as environmental textures).

The similarity of textures may be determined in a number of suitable ways. For example, textures intended for similar objects may be grouped as a group of similar textures, such as textures intended for: foliage (such as tress, bushes and plants); furniture (such as chairs and tables); walls; people (e.g. textures for in-game non-player characters or user avatars); or any other suitable group of similar objects. Alternatively, or in addition, textures representative of the same type of material may be grouped as a group of similar textures, such as textures representative of metallic materials; wooden materials; fabric materials; plastic materials; glass materials; or any other suitable type of material that may be represented by a texture. Any other suitable way of grouping textures into groups of similar textures may alternatively or additionally used.

In these cases, the neural network may be trained using a plurality of fixed-sized data chunks from each of the textures in a plurality of similar textures. The trained neural network may be output with at least one of fixed-sized data chunk of a particular one of the plurality of textures to output an encoded representation of at least a portion of the particular one of the plurality of textures.

In some cases, textures may be stored as mip-maps, where a mip-map stores a plurality of representations (known as mips) of the same image at varying levels of resolution. The highest resolution representation is referred to as the highest (or first) level mip. A mip at a given level will have a height and width that is half the size of a mip at the level directly above, and twice the size of a mip at the level directly below (unless the given mip is the lowest level mip in the mip-map, in which case there will be no mip directly below the given mip).

For example, the second highest resolution representation (the second level mip) will have a height and width that is half the size of the height and width first level mip, and the height and width of the second level mip will be twice the size of the height and width of the third level mip (if the second level mip is not the lowest level mip because, in that case, there will not be a third level mip).

Additionally, for some textures, there may be several possible ways to recolour a particular portion of a given texture. This may be due to ambiguities caused by portions of the given texture being similar to one another except for the colour of those portions (e.g. an apple may be red or green, and the given texture may be a texture for a bowl of red and green apples).

Therefore, even when trained for a given texture, the neural network as described elsewhere herein may, in some cases, not be able to, or may incorrectly or improperly, infer an inferred pixel colour block of at least a second colour channel of a fixed-sized block of pixels of the given texture based on an input representative of a fixed-sized data chunk representative of a first colour channel of a fixed-sized block of pixels of a given texture.

Therefore, optionally, in some embodiments of the present disclosure, the neural network may be trained using a mip of at least the second colour channel of the given texture at a mip level lower than a mip level of the given texture. In these embodiments, the step of outputting 230 the encoded representation of at least a portion of the given texture comprises outputting at least a portion of the lower level mip corresponding to a region of the fixed-sized block of pixels of the given texture. Optionally, the mip may be the lowest level mip.

Therefore, the neural network may be trained to output an inferred pixel colour block representative of at least a second colour channel of a fixed-sized block of pixels of the given texture based on an input representative of at least the second colour channel at a region of the lower level mip corresponding to a region of the fixed-sized block of pixels of the given texture, and representative of a fixed-sized data chunk representative of the first colour channel of the fixed-sized block of pixels of the given texture. Therefore, the inference of at least the second colour channel performed by the neural network may be advantageously improved.

As an example, the neural network may comprise one or more additional input nodes, where one of the additional input nodes may be representative of a colour value in the second channel of a pixel of the lower level mip corresponding to the fixed-sized block of pixels of the given texture.

Providing the lower level mip will increase the overall memory footprint of the coded texture in comparison to a case where the lower level mip is not provided, but this provision may increase the overall quality when the texture is decoded. Moreover, even though providing the lower level mip may increase the overall memory footprint for the presently described techniques, the memory footprint may still advantageously be lower for an equivalent level of quality in comparison to the memory footprint and quality for the BCn algorithms.

For example, returning to the above example where an 8-bit RGB texture having a resolution of 3840x2160, which will require ~25MB of memory (1 byte per colour per pixel) when uncompressed. The BC1 compressed texture will require ~4MB of memory. Meanwhile, the memory footprint of all of the fixed-sized data chunks of the texture encoded in accordance with the embodiments of the present disclosure will require ~3MB of memory.

In this example, this texture may be stored in storage as a mip-map, where this texture is the highest level mip. The mip-map may have five levels in total (although it may have greater or fewer levels) so the fifth level mip is the lowest level mip in this example. The fifth level mip would have a resolution of 240x135, which will require ~0.1MB of memory when uncompressed. Therefore, if the neural network comprises 100,000 weights, even in the case where the encoded representation comprises a fifth level 8-bit RGB mip, the encoded representation of the texture will have a memory footprint of ~3.2MB, which is 0.8MB (20%) less than the memory footprint of the BC1 compressed texture.

It will be appreciated that, in the above example, the first colour channel that may be used for the fixed-sized data chunks of the texture encoded in accordance with the embodiments of the present disclosure may be any of the RGB colour channels, or another colour channel such as greyscale. Additionally, it will be appreciated that it may not be necessary to provide the entire fifth level 8-bit RGB mip.

For example, if the first colour channel used for the fixed-sized data chunks of the texture encoded in accordance with the embodiments of the present disclosure is the green colour channel, it may be advantageous to provide only the red and blue colour channels of the fifth level mip because these are the colour channels that the neural network will be inferring based on the decoded green colour channel. This would reduce the memory footprint of the fifth level mip provided as a part of the encoded representation by "33%.

Further optionally, the lower level mip may be compressed. For example, the lower level mip may be compressed using any known texture compression techniques that encode a representation of a texture using a plurality of colour channels, such as the BC1 algorithm but not the BC4 algorithm.

Turning now to figure 4, a method 400 for texture decoding is provided in accordance with embodiments of the present disclosure.

The method 400 comprises a step of storing 410 a fixed-sized data chunk representative of a first colour channel of a fixed-sized block of pixels of a given texture, the details of which have been described elsewhere herein.

For example, the stored fixed-sized data chunk representative of the first colour channel of the fixed-sized block of pixels of the given texture may be the, or one of, the at least one fixed-sized data chunk output in the outputting 230 step in figure 2, which have been described elsewhere herein.

The method 400 further comprises a step of storing 420 weights of a neural network trained, for the given texture, to output an inferred pixel colour block representative of at least a second colour channel of a respective fixed-sized block of pixels of the given texture based on an input representative of a respective fixed-sized data chunk representative of the first colour channel of the respective fixed-sized block of pixels of the given texture.

For example, the stored weights may be the weights output in the outputting 230 step in figure 2, which have been described elsewhere herein.

Additionally, the neural network may be the neural network 300, which has been described elsewhere herein.

The method 400 further comprises a step of decompressing 430 the fixed-sized data chunk to obtain a first pixel colour block representative of the first colour channel of the fixed-sized block of pixels of the given texture.

The step of decompressing 430 may be performed in accordance with the above described BC4 algorithm for example. However, it should be noted that the presently disclosed techniques are not limited to using the BC4 algorithm, or even limited to using the BCn algorithms. For example, the BCn algorithms are all applied to a respective 4x4 blocks of pixels. The presently claimed techniques is not limited to such an implementation and may instead may compress a 5x5 block of pixels, a 6x6 block of pixels, a 3x3 block of pixels, a 10x10 block of pixels, or any other sized block of pixels as the size of the fixed-sized block of pixels. However, it should be noted that the present techniques still require that a fixed-sized block of pixels is used, but any particular size may be selected as the fixed-size for a given implementation.

Additionally, the present techniques are not limited to square block sizes and may, for example, use a 4x8 block of pixels, an 8x4 block of pixels, a 3x5 block of pixels, a 4x3 block of pixels or, any other sized block of pixels as the size of the fixed-sized blocks of pixels.

The method 400 further comprises a step of inferring 440, using the trained neural network, a second pixel colour block representative of at least the second colour channel of the fixed-sized block of pixels of the given texture based on an input representative of the fixed-sized data chunk.

It will be appreciated that the neural network may be trained to, and used to, infer one or more additional pixel colour blocks representative of one or more additional colour channel of the fixed-sized block of pixels of the given texture based on an input representative of the fixed-sized data chunk.

Optionally, as indicated by the dotted outline in figure 4, in some embodiments of the present disclosure, the method 400 may comprise a step of storing 415 a mip of at least the second colour channel of the given texture at a mip level lower than a mip level of the given texture. The lower level mip of at least the second colour channel of the given texture has been described in more detail elsewhere herein.

In these embodiments, the neural network may be trained using the lower level mip; and the input to the trained neural network in the step of inferring 440 may also be representative of at least the second colour channel at a region of the lower level mip corresponding to a region of the fixed-sized block of pixels of the given texture, which has been described elsewhere herein.

Optionally, in embodiments of the present disclosure, the method 400 may be performed by a GPU. Further optionally, the GPU may comprise a cache that is accessible in the inferring 440 step. The cache may be configured to store the lower level mip in the cache. This is possible due to the lower level mip having a smaller size than the rest of the encoded representation of the given texture. Because the lower level mip is stored in the cache, an access latency for retrieving data of the mip may be reduced.

This may be especially advantageous in a case where the GPU comprises a plurality of parallel shaders that are each operable to query a respective copy of the neural network to generate results in parallel and thus speed up the decoding process because a plurality of shaders may all need to access colour data for a particular pixel of the lower level mip since the particular pixel may correspond to a plurality of fixed-sized pixel blocks of the given texture due to the lower resolution of the lower level mip.

As previously described, in some embodiments of the present disclosure, a respective fixed-sized data chunk may be 6 bytes of data. In these embodiments, a texture may be coded with an equivalent quality but a reduced memory footprint in comparison to a texture coded with previously known techniques for texture coding.

Alternatively, in some embodiments of the present disclosure, a respective fixed-sized data chunk may be 8 bytes of data. In these embodiments, a texture may be coded with an improved quality but an equivalent memory footprint in comparison to a texture coded with previously known techniques for texture coding.

Of course, it will be appreciated that any other suitable size for the fixed-sized data chunk may be selected, where a larger size will have an improved quality in comparison to a smaller size but will consequently have a larger memory footprint. Nevertheless, for any particular size of fixed-sized data chunk, the presently disclosed techniques may advantageously provide a coded texture with an improved texture quality having an equivalent memory footprint in comparison to a coded texture that is coded using previously known techniques for the same particular fixed-sized data chunk.

Turning now to figure 5, in embodiments of the present disclosure, a texture encoder 500 is provided. The texture encoder 500 comprises: a compression unit 510 configured to compress a first colour channel of a given texture to obtain a plurality of fixed-sized data chunks representative of the first colour channel of a corresponding plurality of fixed-sized blocks of pixels of the given texture; a training unit 520 configured to, for the given texture, train, using the plurality of fixed-sized data chunks, a neural network to output an inferred pixel colour block representative of at least a second colour channel of a respective fixed-sized block of pixels of the given texture based on an input representative of a respective fixed-sized data chunk representative of the first colour channel of the respective fixed-sized block of pixels of the given texture; and an output unit 530 configured to output at least one of the fixed-sized data chunks and the weights of the trained neural network as an encoded representation of at least a portion of the given texture.

Turning now to figure 6, in embodiments of the present disclosure, a texture decoder 600 is provided. The texture decoder 600 comprises: a memory 610 configured to store a fixed-sized data chunk representative of a first colour channel of a fixed-sized block of pixels of a given texture; the memory 610 is configured to store weights of a neural network trained, for the given texture, to output an inferred pixel colour block representative of at least a second colour channel of a respective fixed-sized block of pixels of the given texture based on an input representative of a respective fixed-sized data chunk representative of the first colour channel of the respective fixed-sized block of pixels of the given texture; a decompression unit 620 configured to decompress decompressing the fixed-sized data chunk to obtain a first pixel colour block representative of the first colour channel of the fixed-sized block of pixels of the given texture; and an inference unit 630 configured to infer, using the trained neural network, a second pixel colour block representative of at least the second colour channel of the fixed-sized block of pixels of the given texture based on an input representative of the fixed-sized data chunk.

Optionally, the texture decoder 600 may be a graphics processing unit and may optionally, as indicated by the dotted outline in figure 6, comprise a cache 640 accessible to the inference unit 630. The cache 640 may be configured to store a mip of the at least the second colour channel of the given texture at a mip level lower than a mip level of the given texture.

Modifications to the encoder 500 and/or the decoder 600 corresponding to the modifications described elsewhere herein will be apparent to the skilled person. Additionally, modifications involving implementing the decoder processes in parallel on a GPU or equivalent processor with parallel processing capability so that the prompting of respective instances of the neural network to generate individual pixels or group of pixels as outputs can be conducted in parallel to speed up the overall generation of the image.

It will be appreciated that the above methods may be carried out on conventional hardware suitably adapted as applicable by software instruction or by the inclusion or substitution of dedicated hardware.

Thus the required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

Accordingly, in a summary embodiment of the present description, the image encoder 500 may be implemented on, for example, a server (not shown) or entertainment device 10, which may comprise the following:
Firstly, a training processor (for example GPU 30 optionally in conjunction with the CPU 20) configured (for example by suitable software instruction), to train for a respective texture a respective neural network, as described elsewhere herein.

Secondly, an output processor (for example CPU 20 optionally in conjunction with the GPU 30) configured (for example by suitable software instruction) to output (for example through data port 60, SSD 50, optical drive 70, or A/V port 90) the encoded representation of a given texture (which comprises the trained neural network), as described elsewhere herein.

Instances of these summary embodiments implementing the methods and techniques described herein (for example by use of suitable software instruction) are envisaged within the scope of the application.

The resulting output can be a non-transitory machine-readable medium (such as an HDD or SSD record, or an optical drive record) comprising the encoded representation, as described elsewhere herein.

This output may be distributed on the medium, or broadcast or streamed as appropriate.

Meanwhile in another summary embodiment of the present description, an image decoder - for example a server (not shown) or entertainment device 10, comprises the following:
Firstly, a receiver (for example CPU 20 optionally in conjunction with the GPU 30) configured (for example by suitable software instruction) to receive (through data port 60, SSD 50, optical drive 70, or A/V port 90) an encoded representation of the given texture, as described elsewhere herein.

Secondly, an image generation processor (for example GPU 30 optionally in conjunction with the CPU 20) configured (for example by suitable software instruction) to prompt the neural network to output the pixel data for the given texture, as described elsewhere herein.

Again, instances of this summary embodiment implementing the methods and techniques described herein (for example by use of suitable software instruction) are envisaged within the scope of the application, including but not limited to that the image generation processor is a graphics processing unit with a plurality of parallel processing units, and is configured to prompt parallel instances of the neural network to output pixel data for a texture in parallel, as described elsewhere herein.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. A method for texture encoding, the method comprising the steps of:
compressing a first colour channel of a given texture to obtain a plurality of fixed-sized data chunks representative of the first colour channel of a corresponding plurality of fixed-sized blocks of pixels of the given texture;
for the given texture, training, using the plurality of fixed-sized data chunks, a neural network to output an inferred pixel colour block representative of at least a second colour channel of a respective fixed-sized block of pixels of the given texture based on an input representative of a respective fixed-sized data chunk representative of the first colour channel of the respective fixed-sized block of pixels of the given texture; and
outputting at least one of the fixed-sized data chunks and the weights of the trained neural network as an encoded representation of at least a portion of the given texture.

2. The method according to any one of the preceding claims, in which
the step of training the neural network comprises a step of calculating a loss function for the neural network by using at least the second colour channel of the respective fixed-sized block of pixels of the given texture as a ground truth.

3. The method according to any one of the preceding claims, in which
the neural network is trained using a mip of at least the second colour channel of the given texture at a mip level lower than a mip level of the given texture; and
the step of outputting the encoded representation of at least a portion of the given texture comprises outputting at least a portion of the lower level mip corresponding to a region of the fixed-sized block of pixels of the given texture.

4. A method for texture decoding, the method comprising the steps of:
storing a fixed-sized data chunk representative of a first colour channel of a fixed-sized block of pixels of a given texture;
storing weights of a neural network trained, for the given texture, to output an inferred pixel colour block representative of at least a second colour channel of a respective fixed-sized block of pixels of the given texture based on an input representative of a respective fixed-sized data chunk representative of the first colour channel of the respective fixed-sized block of pixels of the given texture;
decompressing the fixed-sized data chunk to obtain a first pixel colour block representative of the first colour channel of the fixed-sized block of pixels of the given texture; and
inferring, using the trained neural network, a second pixel colour block representative of at least the second colour channel of the fixed-sized block of pixels of the given texture based on an input representative of the fixed-sized data chunk.

5. The method according to claim 4, further comprising a step of:
storing a mip of the at least the second colour channel of the given texture at a mip level lower than a mip level of the given texture, in which
the neural network is trained using the lower level mip, in which
the input to the trained neural network in the step of inferring is also representative of at least the second colour channel at a region of the lower level mip corresponding to a region of the fixed-sized block of pixels of the given texture.

6. The method according to any one of the preceding claims, in which
a respective fixed-sized data chunk is 6 bytes of data.

7. The method according to any one of claims 1-5, in which,
a respective fixed-sized data chunk is 8 bytes of data.

8. The method according to any one of the preceding claims, in which
the first colour channel is one of the colour channels from the list consisting of:
(i) a green colour channel;
(ii) a red colour channel;
(iii) a blue colour channel; and
(iv) a greyscale colour channel.

9. A neural network for texture coding trained for a given texture, the neural network trained to:
receive an input representative of a respective fixed-size data chunk representative of a first colour channel of a respective fixed-sized block of pixels of the given texture; and
output an inferred pixel colour block representative of at least a second colour channel of the respective fixed-sized block of pixels of the given texture.

10. A method of training a neural network for a given texture according to the neural network of any one of the preceding claims.

11. Computer software which, when executed by a computer, causes the computer to carry out the method of any one of the preceding claims.

12. A non-transitory machine-readable storage medium which stores computer software according to claim 11.

13. A texture encoder comprising:
a compression unit configured to compress a first colour channel of a given texture to obtain a plurality of fixed-sized data chunks representative of the first colour channel of a corresponding plurality of fixed-sized blocks of pixels of the given texture;
a training unit configured to, for the given texture, train, using the plurality of fixed-sized data chunks, a neural network to output an inferred pixel colour block representative of at least a second colour channel of a respective fixed-sized block of pixels of the given texture based on an input representative of a respective fixed-sized data chunk representative of the first colour channel of the respective fixed-sized block of pixels of the given texture; and
an output unit configured to output at least one of the fixed-sized data chunks and the weights of the trained neural network as an encoded representation of at least a portion of the given texture.

14. A texture decoder comprising:
a memory configured to store a fixed-sized data chunk representative of a first colour channel of a fixed-sized block of pixels of a given texture;
the memory configured to store weights of a neural network trained, for the given texture, to output an inferred pixel colour block representative of at least a second colour channel of a respective fixed-sized block of pixels of the given texture based on an input representative of a respective fixed-sized data chunk representative of the first colour channel of the respective fixed-sized block of pixels of the given texture;
a decompression unit configured to decompress decompressing the fixed-sized data chunk to obtain a first pixel colour block representative of the first colour channel of the fixed-sized block of pixels of the given texture; and
an inference unit configured to infer, using the trained neural network, a second pixel colour block representative of at least the second colour channel of the fixed-sized block of pixels of the given texture based on an input representative of the fixed-sized data chunk.

15. The texture decoder according to claim 14, in which
the texture decoder is a graphics processing unit comprising a cache accessible to the inference unit, and the cache is configured to store a mip of the at least the second colour channel of the given texture at a mip level lower than a mip level of the given texture.
